(19)

Europäisches
Patentamt
European
Patent Office
Office européen
des brevets

(11) **EP 2 175 224 A1**

(12) **EUROPEAN PATENT APPLICATION**
published in accordance with Art. 153(4) EPC

(43) Date of publication:
**14.04.2010 Bulletin 2010/15**

(21) Application number: **08777158.0**

(22) Date of filing: **12.06.2008**

(51) Int Cl.:
*F28G 13/00* (2006.01)     *C02F 1/00* (2006.01)
*F28F 19/00* (2006.01)     *F28F 19/01* (2006.01)
*F28F 25/00* (2006.01)     *F28F 27/00* (2006.01)

(86) International application number:
**PCT/JP2008/060742**

(87) International publication number:
**WO 2009/016891 (05.02.2009 Gazette 2009/06)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **30.07.2007 JP 2007197640**

(71) Applicant: **Kurita Water Industries Ltd.
Shinjuku-ku, Tokyo 160-8383 (JP)**

(72) Inventors:
• **NAKANO, Tadashi
Tokyo 160-8383 (JP)**
• **UCHIDA, Takahiko
Tokyo 160-8383 (JP)**
• **NAGAI, Naohiro
Tokyo 160-8383 (JP)**

(74) Representative: **Banzer, Hans-Jörg
Kraus & Weisert
Patent- und Rechtsanwälte
Thomas-Wimmer-Ring 15
D-80539 München (DE)**

(54) **METHOD AND APPARATUS FOR CONTROLLING CHEMICAL FEEDING IN COOLING WATER SYSTEM**

(57) Cooling water (circulating back water) which is raised its temperature by a refrigerator 12 is sprayed from a spraying device 2 of a cooling tower, and is collected in a pit 4. The cooling water in the pit 4 is circulated via a circulation pump (10), a circulation forward pipe (11) and a circulation return pipe through the refrigerator 12. Make-up water is supplied from a make-up water line 9 at a rate corresponding to an evaporation loss, windage loss W and a blowdown water amount B from a blowdown valve 8 of a blowdown line 7 of the cooling tower 1. A load of the cooling tower is calculated based on a temperature difference between the circulating forward water and the circulating back water, and a feeding rate of a treating agent from a feeding device 14 is controlled based on the load.

Fig. 1

**Description**

Field of the Invention

The present invention relates to a method and apparatus for controlling feeding an agent to an open recirculating cooling water system.

Background of the Invention

An open recirculating cooling water system for an industry or an air conditioner employs a heat exchanger such as a refrigerator where water being heated by heat-exchange is cooled by evaporating a part thereof in a cooling tower and releasing latent heat, and cooled water is circulated.

Water in an open recirculating cooling water system is circulated and a part thereof is lost by evaporation, whereby corrosion, scaling or slime problems occur frequently. Various kinds of water treating agents (hereinafter "agent (s)") are added to cooling water in an open recirculating cooling water system to prevent the problems. Such agents include phosphates for preventing corrosion, water-soluble polymers for preventing scaling, and sterilizing agents for preventing slime adhesion.

Water of the cooling system should contain the above agents at a determined concentration or higher than it continuously to achieve enough effects. However, excess feeding of agents is not only wasteful in costs but also causes sometimes adverse effects. A concentration of an agent in a cooling water system is accordingly necessary to be controlled so that objects are achieved most effectively and economically.

JP 11-211386A describes a method for controlling feeding rate of a water treating agent to a cooling water system which includes a step of calculating a total feeding amount of the agent based on a flow rate determined by a flowmeter of an agent feeding device; a step of calculating a number of cycles of concentration (hereinafter "number of cycles" or "cycles of concentration") of cooling water based on an electrical conductivities of make-up water and circulating cooling water; a step of calculating evaporation loss based on a refrigeration capacity of a refrigerator, and a load and operation time of the refrigerator; a step of calculating make-up water quantity based on the cycles of concentration and the evaporation loss; and a step of calculating a target concentration of the agent in the cooling water and controlling feeding rate of the agent such that a concentration of the agent in the cooling water is within a range of the target concentration.

Patent document 1: JP 11-211386A

As a load on a refrigerator fluctuates seasonally, a set value of a load thereon is required to be changed at an each season, which is troublesome.

Summary of the Invention

An object of the present invention is to provide a method and apparatus for controlling feeding an agent to a cooling water system which enables controlling a feeding rate of the agent easily.

A method according to a first aspect for controlling feeding an agent to an open recirculating cooling water system where water is recirculated between a heat exchanger and a cooling tower, wherein the method has a step of calculating a load of the cooling tower based on a difference between a temperature of circulating forward water sent out from the cooling tower and a temperature of circulating back water returning to the cooling tower, and a step of controlling a feeding rate of the agent based on the load of the cooling tower.

A method according to a second aspect is **characterized in that,** in the above first aspect, a sum of a blowdown water quantity and a windage loss is calculated based on a quantity of the circulating water, the difference between the temperatures, and a number of cycles, and the feeding rate of the agent is calculated based on the sum thus calculated and a predetermined concentration of the agent in the circulating cooling water.

A method according to a third aspect is **characterized in that,** in the above second aspect, the cycles of concentration is calculated based on electrical conductivities of the cooling water and make-up water.

An apparatus according to a fourth aspect for controlling feeding an agent to an open recirculating cooling water system has a mechanism or device for circulating cooling water through a heat exchanger; a cooling tower for cooling the cooling water; and a feeder for feeding a water treating agent to the circulating cooling water, wherein the apparatus has a calculator for calculating a load of the cooling tower based on a difference between a temperature of circulating forward water sent out from the cooling tower and a temperature of circulating back water returning to the cooling tower; and a controller for controlling a feeding rate of the agent based on the load of the cooling tower.

In the present invention, the feeding rate of the agent can be easily controlled based on the load of the cooling tower calculated based on a difference between the temperature of the circulating forward water which is sent out from the cooling tower and the temperature of the circulating back water which is returning to the cooling tower, without seasonal setting of parameters.

In the cooling tower, the cooling water is cooled by evaporating a part thereof and releasing latent heat. Consequently, the greater the load of the cooling tower, the larger the evaporation loss of the cooling water, and accordingly, the larger the blowdown water quantity. The load of the cooling tower can be calculated based on the circulating water quantity and the difference between the temperature of the circulating forward water and the temperature of the circulating back water. Accordingly, in the present invention, the blowdown water quantity is calculated based on the load, and the required feeding rate of the agent can be calculated based on the blowdown water quantity.

The cooling water is also lost from the cooling tower by windage. The sum of the windage loss and the blowdown water quantity can be calculated based on the quantity of the circulating water, the above temperature difference and the cycles of concentration, in view of the balance of salts in the cooling water system. The cycles of concentration can be calculated based on the electrical conductivities of the make-up water and the cooling water. The optimum feeding rate of the agent can be calculated based on the predetermined concentration of the agent in the cooling water and the sum of the windage loss and the blowdown water quantity.

Brief Description of the Drawings

Fig.1 is a flow diagram of a recirculating cooling water system.
Fig.2 is a graph showing the result of Example 1.
Fig.3 is a graph showing the result of Comparative Example 1.
Fig.4 is a graph showing the results of Example 2 and Comparative Example 2.

Detailed Description

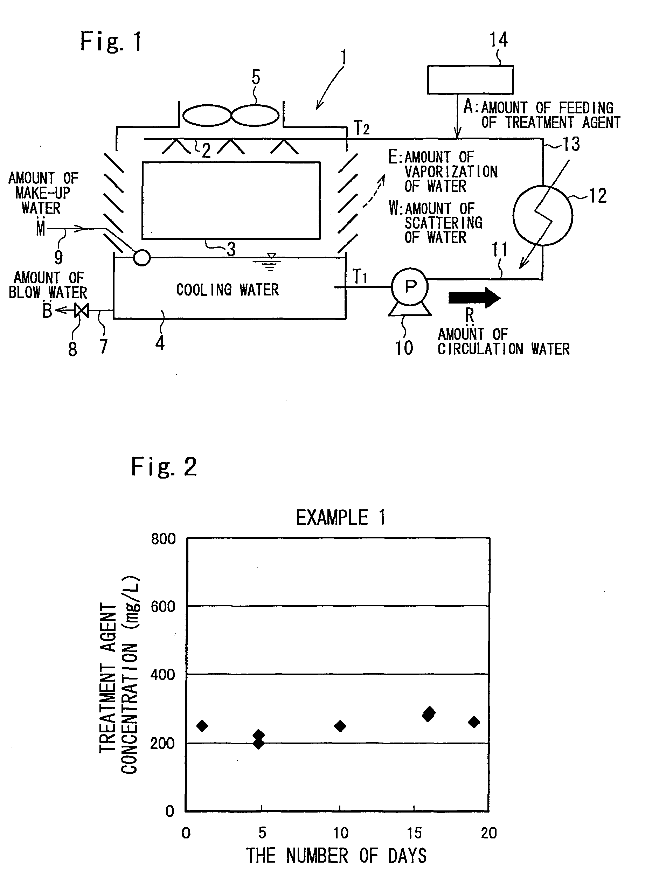

Fig.1 is a diagram showing a flow of a cooling tower system to which a method and apparatus for controlling feeding an agent to a cooling water system according to an embodiment of the present invention are applied. Cooling water (circulating back water) heated by a refrigerator 12 and returning to a cooling tower 1 is sprayed from a water spraying device 2 of the tower 1 and is cooled through gas-liquid contact with air taken into the cooling tower 1 by a fan 5, and then is collected in a bottom tank 4 referred to as a pit. The cooling water in the bottom tank 4 is circulated to the refrigerator 12 through a circulation pump 10, a circulation supply pipe 11, and a circulation return pipe 13.

Make-up water is supplied through a make-up water line 9 at an amount corresponding to evaporation loss E, windage loss W of the sprayed water and blowdown water quantity B blown from a blow valve 8 of a blow line 7. The make-up water is supplied into the bottom tank 4 so as to keep the water level in the bottom tank constant, regardless of how the evaporation loss and the windage loss vary and the blowdown is carried out appropriately. The water level in the bottom tank is controlled automatically by a ball tap valve or the like. The blowdown is carried out appropriately when the water quality of the cooling water system has degraded.

For the purposes of preventing corrosion of pipes and apparatuses by the cooling water, a water treating agent is fed by a treating agent feeding device 14 installed on the circulation return pipe 13 through which the cooling water returns to the cooling tower 1. However, the position of feeding of the treating agent is not limited thereto.

A method for controlling feeding the treating agent according to the present invention will be described below.

In general, the evaporation loss in the open recirculating cooling water system is proportional to the load of the cooling tower of the system.
The make-up water quantity is calculated based on the evaporation loss and the windage loss in the cooling tower and the number of cycles (cycles of concentration) in the open recirculating cooling water system. Concentration of the treating agent in the cooling water can be calculated based on the feeding rate of the treating agent, the load of the cooling tower, and the number of cycles of the cooling water.

In general, the treating agent concentration C in the open recirculating cooling water system can be calculated by the following equation (1).

$$C = (G/M) \cdot N \qquad (1)$$

where

C: treating agent concentration ($g/m^3$)
G: feeding rate of treating agent (g/Hr)
N: number of cycles (-)
M: make-up water quantity ($m^3$/Hr).

The make-up water quantity can be represented by the following equation (2).

$$M = E + B + W \qquad\qquad (2)$$

where

E: evaporation loss ($m^3$/Hr)
B: blowdown water quantity ($m^3$/Hr)
W: windage loss ($m^3$/Hr).

Furthermore, the sum (B + W) of the blowdown water quantity B and the windage loss W can be represented by the following equation (3).

$$B + W = E/(N - 1) \qquad (3)$$

The equation (3) is derived as follows. That is, the number of cycles N of the cooling water indicates the ratio of dissolved salts concentration in the circulating water to that of the make-up water, and is defined by the following equation (4):

$$N = C_R/C_M \qquad (4)$$

where

$C_R$ = dissolved salts concentration in the circulating water
$C_M$ = dissolved salts concentration in the make-up water

In consideration of the mass balance of the salts in the cooling water system, in the case where the cooling water system is operated in a steady state, the amount of dissolved salts contained in the make-up water is equivalent to the amount of dissolved salts contained in the blowdown water and windage water. Therefore the number of cycles is represented by the following equation (5).

$$C_M \cdot M = C_R(B + W) \qquad\qquad (5)$$

Following equation (6) is derived from the equations (4) and (5) :

$$N = M/(B + W)$$
$$= (E + B + W)/(B + W) \qquad\qquad (6)$$

This equation (6) is transformed and, thereby, the above-described equation (3) is obtained.
In general, the concentration of salts in water is proportional to the electrical conductivity of the water. Therefore, the number of cycles of the cooling water system can be calculated based on the following equation (7) by measuring the electrical conductivities of the make-up water and the cooling water.

$$N = \mu S_R / \mu S_M \qquad\qquad (7)$$

where

$\mu S_R$: electrical conductivity of the cooling water ($\mu$S/cm)
$\mu S_M$: electrical conductivity of the make-up water ($\mu$S/cm)

The electrical conductivity can be measured easily and promptly, and the measurement of the electrical conductivity can be processed as an electric signal by measuring it by electrical conductivity sensor, so that the number of cycles N of the cooling water system can be determined easily based on the measurement of the electrical conductivity. In the case where variations in water quality of the make-up water are small, a known value of the electrical conductivity may be used and the measurement of the electrical conductivity of the make-up water may be omitted.

The sum (B + W) of the blowdown water quantity B and the windage loss W can be represented by the following equation (8).

$$B + W = R \cdot \Delta T / [580 \cdot (N - 1)] \qquad\qquad (8)$$

Where

R: circulating water quantity ($m^3$/hr)
$\Delta T$: temperature difference ($\Delta T = T_2 - T_1$) between the temperature $T_2$ (°C) of the circulating back water and the temperature $T_1$ (°C) of the circulating forward water.

The equation (8) is derived as follows.
In general, heat release due to latent heat of evaporation in the cooling tower is equal to heat quantity which the cooling water receives from the refrigerator. The heat release in the cooling tower is a product of the evaporation loss E ($m^3$/hr) and the latent heat of evaporation $H_L$, and the heat quantity which the cooling water receives from the refrigerator is a product of the temperature drop $\Delta T$ (°C) between the circulating back water returning to the cooling tower and the circulating forward water sent out from the cooling tower, the circulating water quantity ($m^3$/hr), and the specific heat of water at constant pressure $C_p$. Consequently, the following equation (9) is derived.

$$E \cdot H_L = R \cdot \Delta T \cdot C_p \qquad\qquad (9)$$

The equation (9) is transformed and, thereby, the evaporation loss E is represented by the following equation (10).

$$E = R \cdot \Delta T \cdot C_p / H_L \qquad\qquad (10)$$

where

$C_p$: specific heat of water at constant pressure (kcal $\cdot$ kg$^{-1}\cdot$ °C$^{-1}$)
$H_L$: latent heat of evaporation of water (kcal $\cdot$ kg$^{-1}$)

When $C_p$ is 0.998 kcalkg$^{-1}$°C$^{-1}$ and $H_L$ is 578 kcalkg$^{-1}$ at a water temperature of 40°C, the evaporation loss E is represented by the following equation (11).

$$E = R \cdot \Delta T / 580 \, (m^3/hr) \qquad\qquad (11)$$

The equation (11) is substituted into the above-described equation (3) and, thereby, the equation (8) is obtained.

$$B + W = R \cdot \Delta T / [580 \cdot (N - 1)] \qquad (8)$$

The number of cycles N in the equation (8) is calculated based on the electrical conductivities of the make-up water and the cooling water, as described above. However, it is also possible to calculate the number of cycles based on chloride ion concentration, potassium ion concentration, magnesium ion concentration, or the like. For example, the number of cycles can be calculated by dividing the chloride ion concentration in the cooling water by that in the make-up water. The circulating water quantity R is calculated based on the amount of discharged water from the pump 10, and may be measured by a flowmeter. In the case where the pump is inverter-controlled so as to increase and decrease the circulating water quantity R, the circulating water quantity R may be calculated based on the inverter signals. These are substituted together with the measurement of $\Delta T$ into the equation (8) and, thereby, the sum of the blowdown water quantity and windage loss (B + W) is calculated.

The feeding rate of the treating agent A (g/Hr) to be fed into the system is equivalent to the product of (predetermined concentration of the agent)·(blowdown water quantity + windage loss), that is, (predetermined concentration of the agent)·(B + W). Therefore, the feeding rate of the treating agent A is calculated according to the following equation and the value of (B + W) calculated from the equation (8).

$$[\text{Feeding rate of the treating agent A}] = [\text{predetermined concentration of the agent}] \cdot R \cdot \Delta T / [580 \cdot (N - 1)].$$

The treating agent feeding device 14 is controlled by a controller so that the treating agent is fed at the above-described feeding rate, thereby, the concentration of the treating agent in the cooling water system can be kept at the desired concentration. The feeding rate of the treating agent can be controlled either by controlling the time of feeding the treating agent, by controlling the amount of discharge rate of the feeding device, by controlling the number of pumps operated, or the like. However, controlling the time of feeding the treating agent with one pump (feeding the treating agent by a timer) is most convenient. The controller of the device 14 receives the above-described water temperatures $T_1$ and $T_2$, the electrical conductivities of the make-up water and the cooling water, and the operation signal of the pump 10, processes the above-described calculations, and then outputs control signals to the treating agent feeding device 14.

Cares to be taken in measuring the above-described temperatures $T_1$ and $T_2$ are as follows.

The temperature of the circulating water is influenced by the temperature of the pipes. Therefore, in the case where the system is provided with long circulation pipes, in winter or the like in which the pipe temperature tends to decrease, the temperature of the circulating water in the vicinity of a refrigerator differs from that in the vicinity of the cooling tower. Consequently, it is preferable that the temperature is measured in the vicinity of the cooling tower. For example, the temperature of the circulating back water is preferably measured on a water distribution plate, in the circulation return pipe in the vicinity of the cooling tower, at an upper potion of a tower packing, or the like. The temperature of the circulating forward water is preferably measured in the vicinity of an outlet of the pit, in the circulation forward pipe in the vicinity of the cooling tower, or the like. A lower portion of the tower packing is unsuitable to measure the temperature to calculate $\Delta T$ of the whole of the system because the temperature varies significantly depending on the part thereof.

The change of the temperature of the circulating forward water delays due to a residence time in the cooling tower. Even when the temperature of the circulating back water lowers rapidly, the temperature of the circulating forward water sometimes does not lower rapidly, and an apparent temperature difference (drop) $\Delta T$ of the cooling tower may become negative, so that the load of the cooling tower cannot be measured accurately within a short time. Consequently, the feeding rate of the agent is preferably calculated based on an average temperature difference in a time period of 0.5 to 10 hrs.

EXAMPLES

The Comparative Examples and the Examples will be described below.

[Comparative Example 1]

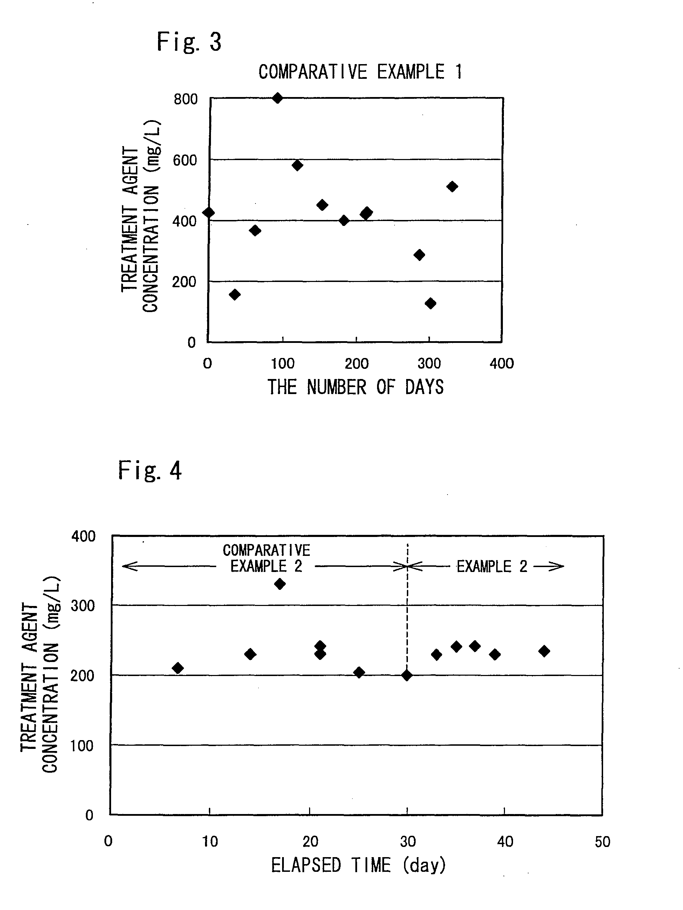

A treating agent was fed to a cooling tower for a compressor intermittently by using a controller controlled by a timer, and a concentration of the agent in cooling water was measured, results of which are shown in Fig.3. The cooling tower has a holding water volume of 4 m$^3$ and a water circulating rate of 160 m$^3$/hr.

The agent was fed to the water at an interval of every three hours, and a feeding rate thereof was adjusted at every season with reference to variation of a load. When the load varied widely, the feeding rate was changed widely in a range from 100 to 800 mg/L.

[Example 1]

The treating agent was fed to the above cooling tower according to the method of the present invention. The predetermined concentration of the agent in the cooling water was set at 200-250 mg/L. Temperature sensors (plantinum temperature measuring resistance Pt100) were arranged at a distribution plate and at an outlet of a pit of the cooling tower, and a temperature difference therebetween was measured at every one minute.

A feeding rate was calculated at an interval of every three hours based on an average temperature difference, and the agent was fed at the feeding rate by using a diaphragm pump. The feeding rate was controlled by changing an operational time of the diaphragm pump.

Operation of the cooling tower and water circulating rate were monitored by start and stop of a circulation pump. When the pump was out of operation, the temperature difference was not measured.

Results thereof were shown in Fig.2. As shown in Fig.2, the concentration of the agent in the circulating water was kept at 200-250 mg/L for 20 days.

[Example 2, Comparative Example 2]

A treating agent was fed to a cooling tower of an open recirculating cooling water system installed at Kurita Water Industries Co., Ltd. according to a method of JP11-211386A (Comparative Example 2) or a method of the present invention (Example 2). Results thereof were shown in Fig.4.

The cooling tower had the following specs.

cooling capacity: 100RT

holding water volume: 2m$^3$

water circulating rate: 20m$^3$/hr

number of cycles: 4

object to be cooled: refrigerator

electrical conductivity of make-up water: 26 mS/m

electrical conductivity of cooling water: 100 mS/m

As shown in Fig.4, the concentration of the agent in the cooling water varied in a wide range according to Comparative Example 2, while it was controlled stably according to Example 2. As the method of Comparative Example 2 did not correspond to the load of the cooling tower, the agent seemed to be fed excessively and its concentration became high during a period when the load was lowered. As the method of Example 2 corresponded to the measured load of the cooling tower, the concentration of the agent was controlled to be stable by following variation of the load.

Although the present invention has been described in detail by using a specific embodiment, it is apparent to those skilled in the art that various modifications may be made without departing from the spirit and the scope of the present invention.

The present application is based on the Japanese Patent Application filed on July 30, 2007 (Japanese Patent Application No. 2007-197640), and incorporates by reference the application in its entirety.

## Claims

1. A method for controlling feeding an agent to an open recirculating cooling water system where water is recirculated between a heat exchanger and a cooling tower,
   wherein said method comprises:

   a step of calculating a load of the cooling tower based on a difference between a temperature of circulating forward water and a temperature of circulating back water; and
   a step of controlling a feeding rate of the agent based on the load of the cooling tower.

2. The method for controlling feeding an agent to an open recirculating cooling water system as claimed in claim 1, wherein a sum of a blowdown water quantity and a windage loss is calculated based on a quantity of the circulating water, said difference between said temperatures, and a number of cycles, and the feeding rate of the agent is calculated based on the sum thus calculated and a predetermined concentration of the agent in the circulating cooling water.

3. The method for controlling feeding an agent to an open recirculating cooling water system as claimed in claim 2, wherein the cycles of concentration is calculated based on electrical conductivities of the cooling water and make-up water.

4. The method for controlling feeding an agent to an open recirculating cooling water system as claimed in claim 2 or 3, wherein the feeding rate (g/Hr) is determined to be a product of the predetermined concentration of the agent in the recirculating cooling water system and $R \cdot \Delta T/[580 \cdot (N-1)]$,
where R is the circulating water quantity, and $\Delta T$ is the temperature difference between $T_1(°C)$ of the temperature of the circulating forward water sent out from the cooling tower and $T_2(°C)$ of the temperature of the circulating back water returning to the cooling tower.

5. An apparatus for controlling feeding an agent to an open recirculating cooling water system comprising:

    means for circulating cooling water through a heat exchanger;
    a cooling tower for cooling the cooling water; and
    a feeder for feeding a water treating agent to the circulating cooling water,
    wherein said apparatus further comprises:

        means for calculating a load of the cooling tower based on a difference between a temperature of circulating forward water sent out from the cooling tower and a temperature of circulating back water returning to the cooling tower; and
        means for controlling a feeding rate of the agent based on the load of the cooling tower.

6. The apparatus as claimed in claim 5, wherein said means for controlling a feeding rate of the agent determines the feeding rate (g/Hr) to be a product of the predetermined concentration of the agent in the recirculating cooling water system and $R \cdot \Delta T/[580 \cdot (N-1)]$,
where R is the circulating water quantity, and $\Delta T$ is a difference between $T_1(°C)$ of the temperature of the circulating forward water and $T_2(°C)$ of the temperature of the circulating back water.

Fig. 1

Fig. 2

EXAMPLE 1

Fig. 3

COMPARATIVE EXAMPLE 1

Fig. 4

## INTERNATIONAL SEARCH REPORT

| International application No. |
| --- |
| PCT/JP2008/060742 |

A.   CLASSIFICATION OF SUBJECT MATTER
*F28G13/00*(2006.01)i, *C02F1/00*(2006.01)i, *F28F19/00*(2006.01)i, *F28F19/01* (2006.01)i, *F28F25/00*(2006.01)i, *F28F27/00*(2006.01)i

According to International Patent Classification (IPC) or to both national classification and IPC

B.   FIELDS SEARCHED

Minimum documentation searched (classification system followed by classification symbols)
F28G13/00, C02F1/00, F28F19/00, F28F19/01, F28F25/00, F28F27/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2008 |
| Kokai Jitsuyo Shinan Koho | 1971–2008 | Toroku Jitsuyo Shinan Koho | 1994–2008 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | JP 2003-130587 A  (Ebara Corp.), 08 May, 2003 (08.05.03), Full text; Figs. 1, 2 (Family: none) | 1-6 |
| Y | Microfilm of the specification and drawings annexed to the request of Japanese Utility Model Application No. 123403/1988(Laid-open No. 045380/1990) (Kajima Corp.), 28 March, 1990 (28.03.90), Full text; Fig. 1 (Family: none) | 1-6 |

☒  Further documents are listed in the continuation of Box C.        ☐  See patent family annex.

| | |
| --- | --- |
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 12 August, 2008 (12.08.08) | 19 August, 2008 (19.08.08) |

| Name and mailing address of the ISA/<br>    Japanese Patent Office | Authorized officer |
| --- | --- |
| Facsimile No. | Telephone No. |

Form PCT/ISA/210 (second sheet) (April 2007)

**INTERNATIONAL SEARCH REPORT**

International application No.

PCT/JP2008/060742

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-107794 A  (Yazaki Corp.),<br>26 April, 2007 (26.04.07),<br>Full text; Figs. 1 to 6<br>(Family: none) | 1-6 |
| A | JP 2003-083818 A  (Kurita Water Industries Ltd.),<br>19 March, 2003 (19.03.03),<br>Par. Nos. [0012] to [0018], [0026]; Fig. 1<br>(Family: none) | 1-6 |
| A | JP 2004-113945 A  (Katayama Chemical, Inc.),<br>15 April, 2004 (15.04.04),<br>Par. Nos. [0011] to [0027]; Figs. 1 to 4<br>(Family: none) | 1-6 |
| A | JP 09-072693 A  (Mitsubishi Plastics, Inc.),<br>18 March, 1997 (18.03.97),<br>Full text; Fig. 3<br>& SG 85585 A | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11211386 A

- JP 2007197640 A